# DEMANDE DE BREVET EUROPEEN

(11) **EP 3 258 141 A1**
(43) Date de publication de la demande: **20.12.2017**
(21) Numéro de dépôt: 17174552.4
(22) Date de dépôt: 06.06.2017
(51) Int. Cl.: F16H 63/38, F16H 63/30

(54) **DOIGT DE PASSAGE EN PIECE DE FONDERIE PERFECTIONNE POUR BOITE DE VITESSE D'UN VEHICULE AUTOMOBILE**

(30) Priorité: 13.06.2016 FR 1655446
(71) Demandeur: Dura Automotive Systems SAS, 91570 Bièvres (FR)
(72) Inventeur: MAITRE, Sébastien, 43120 Monistrol sur Loire (FR); NOGIER, Joris, 42400 Saint-Chamond (FR)
(74) Mandataire: Cabinet Laurent & Charras

(57) **Abrégé**

Le dispositif (1) selon l'invention est réalisé dans une pièce (1a) de fonderie comprenant, d'une part, un doigt de passage (4) apte à coopérer avec une encoche d'une crosse sélectionnée et, d'autre part, un organe d'indexage (5) en saille avec une face (5a) présentant un profil en came apte à permettre une indexation en faisant office de piste de billage, la face (5a) est recouverte d'une feuille de métal (6) qui épouse la forme du profil en came et qui présente un coefficient de frottement inférieur à celui de ladite face (5a).

## Description

L'invention se rattache au secteur technique des boîtes de vitesse mécaniques pour véhicules automobiles.

Plus particulièrement, l'invention concerne un dispositif de transmission d'un mouvement lors d'un changement de rapport dans une boîte de vitesses mécanique d'un véhicule automobile.

Dans un exemple connu de réalisation, le dispositif de transmission est réalisé dans une pièce de fonderie comprenant, d'une part, un doigt de passage apte à coopérer avec une encoche d'une crosse sélectionnée et, d'autre part, un organe d'indexage en saille avec une face présentant un profil en came apte à permettre une indexation en faisant office de piste de billage.

Plus précisément, le doigt de passage coopère avec une encoche que présente une crosse fixée sur un axe pour le déplacement d'une fourchette de commande d'un baladeur pour le passage d'un rapport de vitesse. Le doigt de passage est assujetti à tout mécanisme de commande approprié, par exemple à une barre de commande accouplée au levier de vitesse ou autre. Ces dispositions ne sont pas décrites en détail car elles sont parfaitement connues pour un homme de métier et sont susceptibles de faire l'objet de différentes variantes d'exécution.

L'invention se situe au niveau de l'organe d'indexage qui constitue une partie du dispositif de transmission sujette à des frottements entrainant une sensation d'inconfort pour un utilisateur manoeuvrant le levier de vitesse, mais aussi affectant l'efficacité de la sélection et du passage des vitesses.

Pour améliorer l'état de surface de la pièce de fonderie, et ainsi diminuer les frottements avec le système de billage, il est connu d'effectuer des opérations de conformage ou d'usinage de la face de l'organe d'indexage en contact avec le système de billage.

Cependant, la pièce de fonderie présente une forme complexe rendant les opérations de conformage ou d'usinage difficiles et onéreuses à mettre en oeuvre.

Pour éviter les dégradations de l'organe d'indexage, il est connu de réaliser des traitements superficiels ou à coeur de la pièce de fonderie pour durcir au moins l'organe d'indexage, afin d'augmenter sa dureté et diminuer son usure au cours du temps, engendrée par le contact et les mouvements répétitifs réguliers du système de billage.

Cependant, ces traitements sont onéreux à mettre en oeuvre sur une pièce de fonderie de forme complexe.

L'invention vise à remédier à ces inconvénients d'une manière simple, sûre, efficace et rationnelle.

Le problème que se propose de résoudre l'invention est de fournir un dispositif de transmission d'un mouvement lors d'un changement de rapport dans une boîte de vitesses d'un véhicule automobile, comprenant un organe d'indexage dont l'état de la surface de contact est amélioré afin de ne pas nuire au confort d'utilisation pour un utilisateur, et d'améliorer la sélection et le passage des vitesses.

Un autre objectif de l'invention est de fournir un tel dispositif dont les coûts de fabrication sont réduits.

Pour résoudre un tel problème, il a été conçu et mis au point un dispositif de transmission d'un mouvement lors d'un changement de rapport dans une boîte de vitesses d'un véhicule automobile, réalisé dans une pièce de fonderie comprenant, d'une part, un doigt de passage apte à coopérer avec une encoche d'une crosse sélectionnée et, d'autre part, un organe d'indexage en saille avec une face présentant un profil en came apte à permettre une indexation en faisant office de piste de billage.

Selon l'invention, la face de l'organe d'indexage qui présente le profil en came est recouverte d'une feuille de métal qui épouse la forme du profil en came.

De cette manière, l'état de surface de l'organe d'indexage est amélioré, d'une façon économique, simple, sûre et rationnelle.

Selon une autre caractéristique de l'invention, la feuille de métal a avantageusement subi un traitement de durcissement, au moins en surface ou de préférence à coeur, tel qu'un traitement de nitruration ou carbonitruration. Ceci permet notamment de s'affranchir de la nécessité de réaliser un traitement durcissant sur l'organe d'indexage en tant que tel, et donc de diminuer davantage les coûts de fabrication.

D'autres avantages et caractéristiques de l'invention ressortiront mieux de la description qui va suivre, donnée à titre d'exemple non limitatif, du dispositif de transmission selon l'invention, à partir des dessins annexés dans lesquels :
- la figure 1 est une vue en perspective du dispositif de transmission selon l'invention, notamment de trois quart face par rapport à l'organe d'indexation ;
- la figure 2 est une vue en perspective similaire à celle de la figure 1, le dispositif étant vu de trois quart arrière par rapport à l'organe d'indexage ;
- la figure 3 est une vue similaire à celle de la figure 1, le dispositif étant représenté en perspective éclatée ;
- la figure 4 est une vue similaire à celle de la figure 2, le dispositif étant représenté en perspective éclatée.

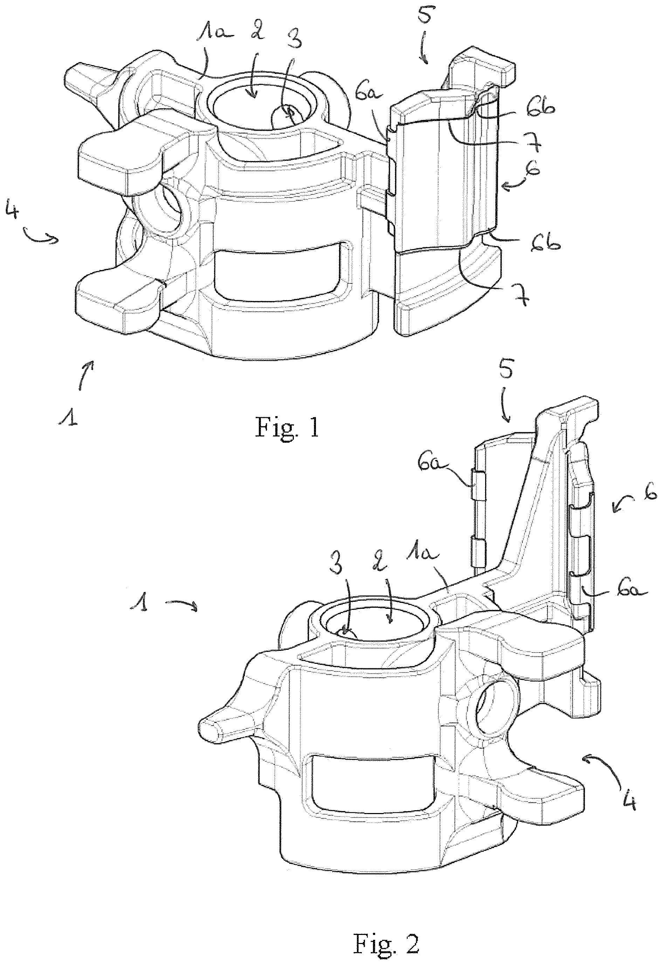

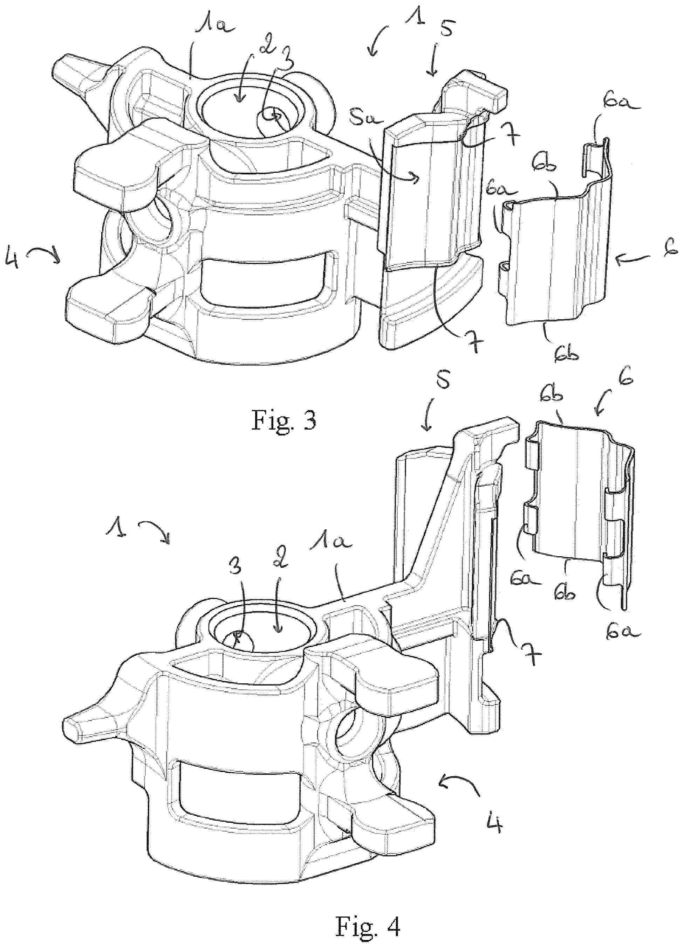

Selon l'invention, et en référence aux figures 1 à 4, le dispositif de transmission (1), notamment pour assurer un changement de rapport dans le cadre d'une boîte de vitesse d'un véhicule automobile, est réalisé dans une pièce (1a) de fonderie de précision.

La pièce (1a) de fonderie de précision comprend un orifice traversant (2) pour le montage d'une barre de commande accouplée au levier de vitesse (non représentés). L'orifice traversant (2) comprend un trou débouchant (3) sur sa paroi latérale pour l'engagement d'un moyen de blocage (non représenté) en translation et en rotation de ladite barre de commande. Le moyen de blocage peut, par exemple, être constitué par une goupille.

La pièce (1a) de fonderie comprend également un doigt de passage (4) faisant saillie radialement par rapport à l'orifice traversant (2). Le doigt de passage (4), dont la fonction est bien connue de l'état de la technique, est apte coopérer avec une encoche d'une crosse coopérant avec une fourchette pour la commande en translation d'un baladeur pour le changement d'une vitesse.

La pièce (1a) de fonderie comprend un organe d'indexage (5) faisant aussi saillie radialement par rapport à l'orifice traversant (2). L'organe d'indexage (5) comprend une face avant (5a), s'étendant selon un plan parallèle à l'axe longitudinal de l'orifice traversant (2), et présentant un profil en came apte à permettre une indexation, par exemple au point neutre de la boîte de vitesse, en faisant office de piste de billage.

La face avant (5a) de l'organe d'indexage (5) est recouverte d'une feuille de métal (6), notamment une tôle, qui épouse la forme du profil en came. De préférence, la feuille de métal (6) présente un coefficient de frottement inférieur à celui de ladite face (5a). La feuille de métal (6) est, par exemple, réalisée en acier, de préférence inoxydable, ou en toute autre matière possédant un meilleur état de surface que celui de la pièce (1a) de fonderie brute, c'est-à-dire avec un coefficient de frottement relativement faible.

La feuille de métal (6) comprend une épaisseur inférieure à 2 mm, par exemple comprise entre 0.4 et 0.8 mm. La feuille de métal (6) présente une forme générale rectangulaire, dont deux opposés (6a), par exemple deux côtés latéraux, sont repliés pour enserrer l'organe d'indexage (5) et permettre la fixation de la feuille de métal (6). La face (5a) de l'organe d'indexage (5) comprend des moyens de blocage (7) en translation de la feuille de métal (6) dans une direction parallèle aux deux côtés repliés de la feuille de métal (6). De préférence, les moyens de blocage (7) se présentent sous la forme de deux rebords, portant aussi la référence (7), destinés pour former des butées aux deux côtés opposés (6b) non repliés de la feuille de métal (6), à savoir par exemple aux côtés inférieur et supérieur de la feuille de métal (6). Ainsi, la feuille de métal (6) est bloquée en translation perpendiculairement aux rebords (7) de l'organe d'indexage (5).

Bien entendu, la feuille de métal (6) peut être fixée de toute autre manière sans sortir du cadre de l'invention, tel que par soudure, sertissage, collage.

L'essentiel de la présente invention réside dans le fait que l'état de surface de l'organe d'indexage (5), réalisé en pièce (1a) de fonderie, est amélioré d'une manière très simple et économique, par la mise en place d'une feuille de métal (6) possédant un coefficient de frottement inférieur sur laquelle sont réalisés tous les contacts et frottements.

La présente invention permet de s'affranchir d'étapes complexes de conformage ou d'usinage de l'organe d'indexation.

Selon une autre caractéristique de l'invention, la feuille de métal (6) a subi un traitement de durcissement, tel qu'un traitement thermique ou un traitement thermochimique, par exemple une nitruration ou une carbonitruration, afin de durcir la surface et/ou le coeur de la feuille de métal (6) et éviter la dégradation de la feuille de métal (6) lors des indexages répétitifs.

La présente invention permet aussi de s'affranchir d'étapes de traitement durcissant sur l'organe d'indexage (5) en tant que tel, qui sont complexes et onéreuses, et propose d'effectuer ces opérations uniquement sur la feuille de métal (6).

## Revendications

1. Dispositif de transmission (1) d'un mouvement lors d'un changement de rapport dans une boîte de vitesses d'un véhicule automobile, ledit dispositif (1) étant réalisé dans une pièce (1a) de fonderie comprenant, d'une part, un doigt de passage (4) apte à coopérer avec une encoche d'une crosse sélectionnée et, d'autre part, un organe d'indexage (5) en saille avec une face (5a) présentant un profil en came apte à permettre une indexation en faisant office de piste de billage, le dispositif (1) est ***caractérisé* en ce que** la face (5a) de l'organe d'indexage (5) qui présente le profil en came est recouverte d'une feuille de métal (6) qui épouse la forme du profil en came.

2. Dispositif de transmission (1) selon la revendication 1, ***caractérisé* en ce que** la feuille de métal (6) est réalisée en acier.

3. Dispositif de transmission (1) selon la revendication 2, ***caractérisé* en ce que** l'acier est inoxydable.

4. Dispositif de transmission (1) selon la revendication 1, ***caractérisé* en ce que** la feuille de métal (6) comprend quatre côtés, dont deux côtés opposés (6a) sont repliés pour enserrer l'organe d'indexage (5) et permettre la fixation de la feuille de métal (6).

5. Dispositif de transmission (1) selon la revendication 4, ***caractérisé* en ce que** la face (5a) de l'organe d'indexage (5) comprend des moyens de blocage (7) en translation de la feuille de métal (6) dans une direction parallèle aux deux côtés repliés (6a) de la feuille de métal (6).

6. Dispositif de transmission (1) selon la revendication 5, ***caractérisé* en ce que** les moyens de blocage se présentent sous la forme deux rebords (7) destinés à former des butées aux deux côtés opposés (6b) non repliés de la feuille de métal (6).

7. Dispositif de transmission (1) selon la revendication 1, ***caractérisé* en ce que** la feuille de métal (6) comprend une épaisseur inférieure à 2 mm.

8. Dispositif de transmission (1) selon la revendication 1, ***caractérisé* en ce que** la feuille de métal (6) a subi un traitement durcissant au moins en surface.

9. Dispositif de transmission (1) selon la revendication 8, ***caractérisé* en ce que** la feuille de métal (6) a subi un traitement durcissant à coeur.

10. Dispositif de transmission (1) selon la revendication 8, ***caractérisé* en ce que** la feuille de métal (6) a subi un traitement de nitruration ou nitrocarburation.
